# EUROPÄISCHE PATENTSCHRIFT

(11) **EP 1 989 853 B1**
(45) Veröffentlichungstag und Bekanntmachung des Hinweises auf die Patenterteilung: **14.12.2016**
(21) Anmeldenummer: 06724873.2
(22) Anmeldetag: 23.02.2006
(51) Int. Cl.: H04L 29/06, H04W 4/06, H04W 80/04

(54) **VERMITTLUNGSSYSTEM UND ENTSPRECHENDES VERFAHREN FÜR UNICAST ODER MULTICAST END-TO-END DATEN- UND/ODER MULTIMEDIASTREAMÜBERTRAGUNGEN ZWISCHEN NETZWERKNODES**
SWITCHING SYSTEM AND CORRESPONDING METHOD FOR UNICAST OR MULTICAST END-TO-END DATA AND/OR MULTIMEDIA STREAM TRANSMISSIONS BETWEEN NETWORK NODES
SYSTÈME DE TÉLÉCOMMUNICATION ET PROCÉDÉ CORRESPONDANT POUR TRANSMISSIONS DE TRAINS DE DONNÉES UNICAST OU MULTICAST DE BOUT EN BOUT ET/OU MULTIMÉDIAS ENTRE DES NOEUDS DE RÉSEAUX

(43) Veröffentlichungstag der Anmeldung: 12.11.2008
(73) Patentinhaber: Togewa Holding AG, 3000 Bern 32 (CH)
(72) Erfinder: HEUTSCHI, Walter, CH-3303 Jegenstorf (CH); STADELMANN, Toni, CH-3065 Bolligen (CH); ZBÄREN, Peter, CH-3126 Kaufdorf (CH)
(74) Vertreter: Buntz, Gerhard
(86) Internationale Anmeldenummer: PCT/EP2006/060221
(87) Internationale Veröffentlichungsnummer: WO 2007/095995

(56) Entgegenhaltungen:
- WO-A-01/76297
- WO-A-2004/017565
- WO-A-2005/117342

## Beschreibung

Die vorliegende Erfindung betrifft ein Verfahren und ein System für uni- oder bidirektionale unicast oder multicast end-to-end Daten- und/oder Multimediastreamübertragungen in heterogenen Netzwerken, wobei ein Netzwerknode über eine Schnittstelle bei einer zentrale Vermittlungseinheit eines IP-Netzwerkes mittels Request eine Datenverbindung zu einem oder mehreren Netzwerknodes fordert, wobei mindestens ein Netzwerknode ein IP-Netzwerknode ist, welche Netzwerknodes bei einem Registrierungsmoduls der zentralen Vermittlungseinheit registriert werden und mittels einem Kontrollmodul der zentralen Verbindungseinheit die Verbindung zwischen den Netzwerknodes aufgebaut wird. Die Erfindung betrifft insbesondere ein Verfahren und ein System für IP-basierte Telefonie und Bildtelefonie, bei welchem IP-Nodes vor der Registrierung im IP-basierten Netzwerk auf Grund von Authentifizierungsdaten von einem Identifikationsmodul authentifiziert werden.

Uni- oder bidirektionale end-to-end Daten- und/oder Multimediastreamübertragungen in IP-Netzwerken, insbesondere die IP-basierte Telefonie ist eine Technologie, welche sich in den letzten Jahren zu einer reellen Alternative zur herkömmlichen Daten- und Sprachübertragung z.B. über leitungsvermittelten Telefonienetzen entwickelt hat. Während herkömmliche Telefongespräche als kontinuierlicher Datenstrom über ein Telefonnetz übertragen werden, werden bei der IP-basierten Telefonie Sprachdaten in Pakete zerlegt und über ein Datennetzwerk einzeln übertragen. Nach der Zerlegung grosser Mengen an akustischen Informationen und Übertragung über das Netzwerk, werden diese kleinen Pakete auf der Empfangsseite wieder zusammengesetzt. Auf diese Weise können Telefoniedienste mit dem Datennetz zusammengelegt werden, wodurch die Installation und Pflege eines separaten Telefonnetzes entfällt, da IP-basierte Telefone über eine entsprechende Schnittstelle an ein Datennetz angeschlossen werden und mittels passender Netzwerkprotokolle Sprachdaten übertragen können. Ein weiterer wichtiger Vorteil von IP-basierter Telefonkommunikation gegenüber herkömmlicher Telefonie ist der Angebot an neuen, erst durch die IP-basierte Technologie ermöglichten Dienste, die einen Mehrwert gegenüber der herkömmlichen Telefonie darstellen. Unter anderem bietet die IP-basierte Telefonie eine automatische Verschlüsselung der Sprachkommunikation, welche abhörsichere Gespräche ermöglicht. Diese Entwicklung der IP-basierten Telefonie hat auch einen Einfluss gehabt auf die parallele Entwicklung der IP-basierten Bildtelefonie als Alternative zu herkömmlichen Videokonferenz-Technologie. Immer schnellere Datenverbindungen erlauben heute simultane Übertragung von Bild und Ton in hervorragender Qualität. Bei der IP-basierten Bildtelefonie werden auch wie bei der IP-basierten Telefonie Sprach- und Bilddaten in Pakete zerlegt, über ein IP-basiertes Netzwerk geschickt und beim Empfänger wieder zusammengesetzt.

Gleichzeitig hat die rasante Entwicklung der drahtlosen Datennetzwerke (WLAN 802.11, Bluetooth etc.) und eine zunehmende Anzahl von sogenannten Hotspots im öffentlichen Bereich (beispielsweise in Flughäfen, Bahnhöfen, Konferenzzentren, Messe- und Ausstellungsgeländen, stark frequentierten Plätzen in den Städten) dazu geführt, dass IP-fähige Geräte heute über eine Mobilität verfügen können, die nur mit den heutigen Mobilfunknetzen (GSM, UMTS etc.) vergleichbar ist. Drahtloser Zugang zu Diensten wie Internet ist heute bereits eine Selbstverständlichkeit. Zudem werden seit einiger Zeit auch IP-basierte Mobiltelefone angeboten, welche mobile IP-basierte Telefonie über ein lokales drahtloses Netzwerk ermöglichen. Diese mobilen IP-Telefone existieren bereits auch in Ausführungen mit integrierten Kameras, wodurch wiederum mobile IP-basierte Bildtelefonie in greifbare Nähe rückt.

Zum Kommunikationsaufbau und Datenaustausch in Telefonie- und/oder Bildtelefonie-Netzwerken müssen von allen Netzwerkkomponenten bestimmte Normen eingehalten werden, die in Protokollen bzw. Protokollfamilien festgelegt sind. Im Stand der Technik sind beispielsweise das Protokoll E-DSS1 (Euro-ISDN) für die leitungsvermittelte Telefonie-Netzwerke oder die Protokolle H.323, SIP, MEGACO bzw. MGCP für die IP-basierte Telefonie und/oder Bildtelefonie bekannt.

Eines der am häufigsten Verwendeten Protokolle für die IP-basierte Telefonie und/oder Bildtelefonie ist das Session Initiation Protocol (SIP, IETF RFC 3261, früher RFC 2543). Es ist durch die Internet Enginieering Task Force (IETF) zum ersten Mal in 1999 spezifiziert worden. Dieses Netzwerkprotokoll hat eine sehr leichte Struktur und ist stark am HTTP (Hypertext Transfer Protocol) angelehnt. Es ermöglicht den Aufbau einer Kommunikationssitzung zwischen zwei und mehr Teilnehmern. Es handelt es sich aber um ein reines Initiierungsprotokoll. Zum Datenaustausch verwenden SIP-basierte Telefonie- und/oder Bildtelefonie-Systeme andere Protokolle, insbesondere SDP (Session Description Protocol, IETF RFC 2327) und das RTP (Realtime Transport Protocol, IETF RFC 1889). SDP dient insbesondere dazu, die zwischen den Endpunkten zu verwendenden Audio- und/oder Video-Codecs, Transportprotokolle usw. auszuhandeln. Aufgabe von RTP ist es, den Multimedia-Datenstrom (Audio, Video, Text usw.) zu transportieren, d.h. die Daten zu kodieren, in Pakete zu zerlegen und zu versenden. Kommunikations-Endpunkte in einem SIP-basierten System werden User Agents genannt. Unter einem User Agent Client (UAC) versteht man eine Komponente, die eine SIP-Anfrage (Request) initiiert, der User Agent Server (UAS) erwidert diese Anfrage mit einer Antwort (Response). Ein User Agent (UA) kann sowohl die Rolle des UAC als auch des UAS einnehmen. Requests, von welchen eine limitierte Anzahl gegeben ist, werden grundsätzlich durch Responses (rund hundert verschiedene) erwidert. Sie tragen lediglich Nummern zur Unterscheidung. Ein User Agent sendet eine SIP-Nachricht vorab an einen SIP-Proxy. Anhand der angegebenen Adresse entscheidet der Proxy, wohin die Nachricht geschickt werden muss und leitet sie weiter. Diese Proxies können grundsätzlich zustandslos (stateless) oder zustandsbehaftet (stateful) sein. Während Stateless Proxies Nachrichten lediglich weiterleiten und eigentlich nicht mitbekommen, dass beispielsweise ein Gespräch aufgebaut wird, können Stateful Proxies Aufgaben übernehmen, die beim Aufbau eines Gesprächs hilfreich sind. Eine der wichtigsten Aufgaben eines Stateful Proxy ist das Verteilen von Anrufen auf verschiedene Ziele: Beim sogenannten "Sequential Forking" werden die möglichen Anrufziele nacheinander angewählt, beim "Parallel Forking" bekommen alle Destinationen gleichzeitig eine Nachricht. Eine weitere unerlässliche Komponente eines SIP-basierten Systems ist ein SIP-Registrar, bei welchem sich alle User Agents registrieren müssen. Diese logische Einheit führt eine Datenbank mit Informationen über die angemeldeten User Agents und lenkt Anfragen auf diese Ziele um. In der Regel sind Registrar und Proxy dasselbe Modul, welches die Umleitung intern regelt, ohne dass Nachrichten ausgetauscht werden müssen. Schliesslich umfasst ein SIP-basiertes System auch einen Redirect Server oder Gateway, der unter anderem die Verbindung zwischen dem IP-basierten Telefonie-Netzwerk und dem PSTN gewährleistet.

Bei der Registrierung verwendet SIP die Register-Methode. Der UA gibt an, wo er zu erreichen ist und erhält die Bestätigung mit dem Code 200 (OK). Falls der Benutzer nicht bekannt ist, wird 404 (Not Found) zurückgegeben, falls die Registrierung nicht erlaubt, lautet die Antwort 403 (Forbidden). Die Voraussetzung für eine erfolgreiche Registrierung ist jedoch eine erfolgreiche Authentifizierung des User Agents im entsprechenden Netzwerk und die Überprüfung seiner Autorisierung für gewünschte Dienste. Hierzu werden in einer SIP-basierten Umgebung meistens Authentifizierungs- und Autorisierungsmethoden RADIUS und/oder DIAMETER eingesetzt, welche auch bei vielen anderen Netzwerkfunktionen zum Einsatz kommen.

Das Authentifikationsprotokoll RADIUS (Remote Authentication Dial-In User Service - IETF RFC 2138, 2868) wird heute in vielen Netzwerkeinheiten, wie z.B. Router, Modemserver, Switch etc. verwendet. Der Authentifizierungs-Client sendet seinen Benutzernamen und sein Passwort an den RADIUS-Server. Der RADIUS-Server überprüft diese Information und autorisiert den Benutzer zum System. Der Grund für die Verbreitung von RADIUS liegt u.a. darin, dass Netzwerkeinheiten im allgemeinen nicht mit einer sehr grossen Anzahl Netzbenutzer mit jeweils unterschiedlicher Authentifizierungsinformation umgehen können, da dies z.B. die Speicherkapazität der einzelnen Netzwerkeinheiten übersteigen würde. RADIUS erlaubt die zentrale Verwaltung von einer Vielzahl von Netzwerkbenutzern (Hinzufügen, Löschen von Benutzern etc.). So ist das z.B. bei ISP (Internet Service Providern) eine notwendige Voraussetzung für ihren Dienst, da ihre Benutzeranzahl häufig mehrere tausend bis mehrere zehntausend Benutzer umfasst. RADIUS erzeugt weiter einen bestimmten permanenten Schutz vor Hackern. Die Remoteauthentifizierung von RADIUS basierend auf TACACS+ (Terminal Access Controller Access Control System+) und LDAP (Lightweight Directory Access Protocol) ist gegen Hacker relativ sicher. Viele andere Remote Authentifizierungsprotokolle haben dagegen nur einen zeitweisen, ungenügenden oder gar keinen Schutz vor Hackerangriffen. Ein anderer Vorteil von RADIUS ist die Tatsache, dass sich RADIUS lange Zeit der de-facto Standard für Remote Authentifizierung war, womit RADIUS auch von fast allen Systemen unterstützt wird.

Mit der Zunahme der Komplexität der geforderten Dienste erwies sich RADIUS jedoch als ungeeignet zur Nutzung in grösseren Netzwerken. Dies machte die Entwicklung eines neuen Protokolls notwendig. Das Diameter Protokoll (IETF RFC 3588) wurde aber nicht von Grund auf neu entwickelt, sondern ein Grossteil des RADIUS-Protokolls wurde erhalten und dessen Fehler beseitigt. Diameter nutzt wie RADIUS Attribut/Wert Paare (AVP) zur Vermittlung von Daten und UDP als Transportprotokoll. Darüber hinaus ist es durch das Hinzufügen neuer Befehle und AVPs erweiterbar. Es stellt ein Basis-Protokoll dar, das die Minimalanforderungen eines Authentifizierungs-Transportprotokolls erfüllt. Daher ist es nicht dafür gedacht, alleine eingesetzt zu werden, sondern sollte immer mit einer anwendungsspezifischen Erweiterung benutzt werden. Diameter ist ein peer-to-peer-Protokoll. Der Diameter client initiiert normalerweise eine Authentifizierungs- oder Authorisierungs-Anfrage eines Nutzers. Der Diameter Server nimmt diese Anfrage entgegen und beantwortet sie entweder oder leitet sie an einen Proxy-Server weiter. Der mobile Node fordert den gewünschten Dienst mittels der Authentifizierungs-Request-Nachricht (AMR), die die AVPs enthält, an. Die zur Authentifizierung benötigten Informationen werden aus dieser Nachricht extrahiert und in Diameter AVPs eingeschlossen. Diese Nachricht wird an den lokalen Diameter-Server, der AAAF bezeichnet wird, weitergeleitet. Der AAAF leitet die Nachricht an den Authentifizierungs-Home-Server (AAAH) weiter. Kann der AAAH den Benutzer erfolgreich authentifizieren, sendet er einen Home-Agent-MIP-Request (HAR) an einen Home Agent. Dieser Home Agent verarbeitet nach Erhalt der HAR zuerst die Diameter-Nachricht und erstellt dann die Antwort HAA mit den benötigten Daten, wie Session-ID usw. und sendet sie an den AAAH. Dieser erstellt die Autentifizierungs-Antwort (AMA), die unter anderem Informationen für das Tunneln von Nachrichten enthält, und sendet sie an den AAAF. Damit ist die Verbindung aufgebaut. Die Mobile-IP-Erweiterung definiert darüber hinaus zahlreiche Sonderfälle, wie die Behandlung von Handoffs.

Zusätzlich zu den Authentifizierung und Autorisierung stellt sich in einem Netzwerk für IP-basierte Telefonie und/oder Bildtelefonie die Frage nach geeigneten Billing-Mechanismen. TAP-Protokoll (Transferred Account Procedure) der Transferred Account Data Interchange Group (TADIG) der GSM-Vereinigung ist das Protokoll, welches im Stand der Technik für das Billing der von mobilen Einheiten beanspruchten Leistung in GSM-Netzwerken bekannt ist. Ein sehr wichtiges Konzept in den GSM-Netzwerken ist das Roaming, eine Methode, welche es einem Benutzer eines Mobilfunkgeräts erlaubt, sein Mobilfunkgerät nicht nur in seinem ursprünglichen Netzwerk, sondern in jedem beliebigen Netzwerk im In- oder Ausland zu benutzen. Diese Methode verlangt aber ein Billing-Konzept, welches die Komplexität der Protokolle und die verschiedene angebotene Dienste fehlerfrei unter einen Hut bringen kann. Daher dürfen die Billing-Methoden für GSM-Netzwerke keinesfalls trivial sein. Heute sind weltweit mehr als 400 GSM-Netzwerke in Betrieb und dazu existieren schätzungsweise mehr als 20'000 individuelle Roaming-Vereinbarungen zwischen den einzelnen Netzwerkbetreibern. Um das Billing zu ermöglichen liegt folglich hinter der scheinbar einfachen Idee des Roamings ein äusserst komplexer Prozess von Informationserfassung, Informationsverteilung und Informationsauswertung. In diesem Zusammenhang dient das Transferred Account Procedure Protokoll (TAP) dem Austausch von Roaming Billing Informationen zwischen den einzelnen Mobilfunknetzdienstanbietern. Am 04. Juni 2000 wurde nach TAP2 und TAP2+ schliesslich TAP3 lanciert. Es existieren bereits Unterversionen TAP3.1 und TAP 3.2. TAP3 kann heute als der Standard bezeichnet werden, obwohl TAP ein sich weiterentwickelndes Protokoll ist.

Der meiste Voice- oder Datenverkehr in GSM-Netzwerken kommt oder endet in einem anderen Netzwerk, als der mobile Benutzer zurzeit ist. Der Betreiber eines lokalen Netzwerkes erhebt Gebühren für jeden Anruf, der bei einem seiner Benutzer endet, unabhängig davon, ob es sich um ein Festnetz oder ein Mobilfunknetz handelt. Zur Vereinfachhung der Gebürenerhebung gehen die lokalen Fixnetzbetreiber mit den lokalen Mobilfunknetzbetreibern gegenseitig Übereinkommen ein. So müssen ein Mobilfunknetzbetreiber in einem Land kein Übereinkommen mit dem Festnetzanbieter in einem anderen Land abschliessen, damit ein Anruf aus dem Mobilfunknetz des ersten Anbieters zum Festnetz des zweiten Anbieters zu verrechnen. Normalerweise hat der Festnetzanbieter im ersten Land mit dem Festnetzanbieter im zweiten Land bereits ein Übereinkommen betreffend Verrechnungsart und Gebühren geschlossen, so dass dann der Mobilfunknetzbetreiber im ersten Land seine Dienste über den Festnetzanbieter mit einer entsprechenden Vereinbarung verrechnen kann. Die Kosten werden üblicherweise entweder direkt (retail billing) oder über einen Service Provider (wholesale billing) dem Benutzer verrechnet. Die Art des Verrechnens von Roaming-Daten- oder Voiceverkehr zwischen unterschiedlichen Mobilfunknetzen (PMN: Public Mobile Network) erfolgt mittels des TAP-Protokolls. Roaming Call Records werden typischerweise entweder als TAP oder als CIBER (Cellular Intercarrier Billing Exchange Roamer) Records erstellt. CIBER Records werden von Mobilfunknetzbetreibern benutzt, welche mit AMPS basierenden Technologien arbeiten, wie z.B. AMPS, IS-136 TDMA und IS-95 CDMA. TAP wird vor allem von GSM / UMTS-Mobilfunknetzdienstanbieter benutzt und ist das Hauptprotokoll für Verrechnungen in GSM / UMTS-dominierten Gebieten.

Details eines Anrufes durch einen Benutzer, der sich in einem fremden Netzwerk (VPMN: Visited Public Mobile Network) befindet, wird in einem Mobile Switching Center (MSC) des Netzwerkes registriert. Jeder Anruf erzeugt so ein oder mehrere Anrufrekords. Der GSM-Standard für diese Rekords ist in GSM 12.05 definiert, obwohl viele Anbieter ihre eigenen Formate benutzen. Die Anrufrekords des MSC werden zu einem Billing-System des VPMN zur Verrechnung übertragen. Diese Anrufrekords werden dann in TAP-Format konvertiert und dem entsprechenden Benutzer zugeordnet. Spätestens innerhalb einer vordefinierten Zeit (z.B.:36 Stunden) werden die TAP-Rekords an den entsprechenden Mobilfunknetzdienstanbieter versandt. Die TAP-Files enthalten zusätzlich Informationen bezüglich des Anbieter-Leistungstarifs (IOT: Inter Operator Tariff) und alle weiteren bilateralen Vereinbarungen und Vergünstigungsschemen. Die TAP-Rekords werden direkt oder üblicher über ein Verrechnungsstelle, wie z.B. ein Clearinghaus, geschickt. Erhält der Heimnetzwerkbetreiber (HPMN: Home Public Mobile Network) ein TAP-Rekord vom VPMN, wird dieses in ein entsprechendes internes Format konvertiert und zusammen mit den normalen Anrufrekords des Benutzers, welche er im Heimnetzwerk erzeugt, verrechnet. Bei Wholesale Billing, bei dem ein Service Provider die anfallenden Kosten dem Benutzer verrechnet, leitet das HPMN die Records weiter an den Service Provider, der die Anrufe insbesondere auch gemäss eigenen Tarifen neu verrechnen kann und die Abrechnung mit z.B. Anrufdetails für den Benutzer erzeugt.

TAP3 unterstützt eine Vielzahl von Diensten. TAP3 wird heute für das Billing zwischen GSM / UMTS-Dienstanbietern und GSM / UMTS-Dienstanbietern, GSM / UMTS-Dienstanbietern und Nicht-GSM-Dienstanbietern (Inter-Standard Roaming) und GSM-Dienstanbietern und Satelliten-Dienstanbietern etc. verwendet. Die drei grundlegenden Dienstkategorien Voice, Fax und sog. Supplementary Services werden bereits seit TAP1 unterstützt. Das Billing von Short Message Service (SMS) ist wegen der Benutzung von Short Message Service Center (SMS-C) Dritter hingegen weniger trivial. Folgende Gründe erschweren das Billing von SMS: 1. Ein Roaming-Benutzer kann während dem Roaming eine SMS empfangen (MT-SMS), 2. Ein Roaming-Benutzer kann während dem Roaming eine SMS (MO-SMS) versenden, indem er die SMS-C seines Heimnetzwerkes benutzt und 3. Ein Roaming-Benutzer kann während dem Roaming eine SMS (MO-SMS) versenden, indem er die SMS-C eines fremden Netzwerkes benutzt. Das Billing von SMS-Diensten wird deshalb erst ab TAP2+ voll unterstützt. Ab TAP3 wird weiter das Billing von Circuit Switched Data, HSCSD (High Speed Circuit Switched Data) und GPRS (General Packet Radio Service) unterstützt. TAP3 unterstützt ebenfalls alle Value Added Services (VAS), wie z.B. das sog. Billing for Content. Das Verrechnen von Value Added Services ist jedoch häufig schwierig, da es das Einverständnis des Dienstanbieters zu den verrechneten Diensten voraussetzt. Customised Application Mobile Enhanced Logic (CAMEL) wird seit der Einführung von TAP3.4 unterstützt. CAMEL ist besonders für Anwendungen bei Prepaid-Diensten für Roaming Benutzer wichtig und dürfte in Zukunft stark an Bedeutung gewinnen. Eine andere wichtige Anwendung von TAP3 ist die Unterstützung von Verrechungen gestützt auf Inter Operator Tariff (IOT). IOT ermöglicht dem Heimnetzwerkdienstanbieter (HPMN) spezielle Angebote und Tarife eines fremden Dienstanbieters (VPMN) zu überprüfen und an den Roaming-Benutzer weiterzugeben. So kann z.B. der VPMN Vergünstigungen oder Discounts für unterschiedliche Anrufdienste oder -levels geben und der HPMN kann diese einfach verifizieren und seine Tarife anpassen. Die Möglichkeit des Verrechnens von Roaming-Diensten unabhängig davon, wo sich der Benutzer gerade befindet, ist ein wertvolles Hilfsmittel für Mobilnetzdienstanbieter und verhindert den Verlust von Einnahmen bei zwischenzeitlichen Vergünstigungen durch einen VPMN. Das TAP-Protokoll umfasst ab TAP3 ebenfalls detaillierte Informationen, von wo ein Anruf genau getätigt wurde, bzw. ein Dienst in Anspruch genommen wurde etc., und wo er hingeleitet wurde. Diese Information hilft ein Profil des jeweiligen Benutzers basierend auf seinem Verhalten aufzustellen, was wichtige Informationen liefert, um das Angebot der Dienste auf die Bedürfnisse der Benutzer anzupassen und zu optimieren. Insbesondere kann es dazu verwendet werden, spezielle Location Based Services, wie z.B. Sport- oder Konzertveranstaltungen etc., anzubieten. Schliesslich erlaubt mit dem Returned Accounts Procedure (RAP) Protokoll TAP3 auch ein differenziertes Errorhandling. So kann mit RAP der HPMN u.a. eingehende TAP-Files auf ihre Gültigkeit und Konformität mit dem TAP-Standart überprüfen und falls notwendig partiell verwerfen, ohne dass damit Verrechnungen von Leistungen verloren gingen die fehlerfrei übertragen wurden.

An der Schnittstelle zwischen der IP-basierten Telefonie- und/oder Bildtelefonie und den herkömmlichen Telefonie-Netzwerken müssen grundsätzlich ähnliche Fragen wie bei der Verrechnung von Gesprächen zwischen zwei verschiedenen Mobilfunknetzbetreibern gelöst werden. Erstens gibt es typischerweise eine Vielzahl an Betreibern, wobei man in der Praxis davon ausgehen kann, dass jeder dieser Betreiber ein eigenes Tarifmodell verwendet. Zweitens kann ein Kunde eines Betreibers beliebige Kunden von anderen Betreibern anrufen, was sich in höheren Gesprächsgebühren niederschlagen wird. Allgemeine Richtlinien zur Durchführung der Ausgleichszahlungen können z.B. in der ITU-Recommendation D.196 nachgelesen werden. Für eine einheitliche Vorgehensweise beim Clearing und Settlement existieren jedoch keine öffentlich zugänglichen Standards und Protokolle. Weiters existieren mehrere Anbieter für ein Clearing House, die insbesondere von Mobilfunkbetreibern zur Abrechnung von Roaming-Gebühren verwendet werden können. Alle diese Anbieter haben jedoch gemeinsam, dass ebenfalls keine öffentlich zugänglichen Standards verwendet werden.

Damit ein Gespräch zwischen zwei Providern über eine zentrale Stelle vergebührt werden kann, müssen alle Provider ein einheitliches Protokoll verwenden. Die Firma TransNexus hat für diese Zwecke das Open Settlement Protocol (OSP) spezifiziert, welches von ETSI in ihrer TIPHON-Spezifikation zum Standard erklärt worden ist. OSP definiert einerseits ein Grundgerüst für einen standardisierten Informationsaustausch. Andererseits sieht die Spezifikation auch bewusst vor, dass Teile des Protokolls ersetzt bzw. erweitert werden können. Somit können spezielle Anforderungen und betreiberspezifische Dienste ebenfalls integriert werden.

Als Übertragungsprotokoll beim OSP wird eine Kombination aus HTTP und S/MIME eingesetzt. Zur Übertragung wird die POST-Methode von HTTP verwendet. Es existiert zwar auch die PUT-Methode, um Daten per HTTP zu einem Server zu übertragen. Jedoch ist es nur mittels der POST-Methode möglich, die mitgesendeten Daten einer bestimmten serverseitigen Ressource zuzuweisen, welche dieWeiterverarbeitung der Daten durchführt Weiters besteht der Inhalt der übertragenen Daten aus einer S/MIME-Nachricht. Um OSP-Nachrichten mit einem Clearing House abzugleichen, existieren zwei Betriebsarten: Der Online Mode und der Bulk Mode. Im Online Mode besteht während der Durchführung eines Gesprächs zwischen den verschiedenen Netzwerkbetreibern eine Verbindung zum Clearing House. Der Grund für diesen Ansatz ist, dass vom Clearing House einige Aufgaben für das Zustandekommen des Anrufs übernommen werden können. Sollte z.B. das dem Anrufer zugehörige Backend Service zu wenig Informationen über das Ziel des Gesprächs besitzen, kann das Clearing House Routingentscheidungen treffen und eine Kontaktadresse des Ziel-Gatekeepers liefern. Weiters ist es denkbar, die Funktionalität eines Service Area Broker (SAB) in das Clearing House zu integrieren. Die Aufgabe eines SAB ist die Ermittlung des günstigsten Weges für den Aufbau des Gesprächs, wobei uhrzeitabhängige Tarife und aktuelle Belastungen der Netzwerke berücksichtigt werden können. Der Nachteil des Online Mode ist jedoch eine Vergrösserung der Verzögerungszeit für den Verbindungsaufbau, denn schliesslich muss der Gatekeeper des Anrufers nicht nur auf verschiedene Antworten des eigenen Backend Service warten, sondern in Folge auch auf die Antworten des Clearing House. Im Bulk Mode wird hingegen nur zu vorgegebenen Zeiten eine Verbindung zum Clearing House aufgebaut. Ein Vorteil dieser Methode ist, dass ein vom Gatekeeper unabhängiger Prozess die CDRs aus dem Backend Service auslesen und am Stück zum Clearing House übertragen kann. Ein weiterer Vorteil im Gegensatz zum Online Mode ist, dass ein vorübergehender Ausfall des Clearing House keine nennenswerten Störungen des eigenen Systems zur Folge hat. Denn sollte ein Transfer von CDRs abgebrochen werden bzw. nicht zustandekommen, so kann er einfach zu einem späteren Zeitpunkt wiederholt werden. Als wesentlicher Nachteil ist jedoch ersichtlich, dass ein Clearing House im Bulk Mode nicht als SAB fungieren kann. Weiters können keine Routingentscheidungen vom Clearing House übernommen werden, weil dies ebenfalls nur im Online Mode erfolgen kann. Die wichtigsten Komponenten einer OSP-Nachricht sind der Pricing Exchange, Authorisation Exchange und Usage Exhange. Pricing Exchange umfasst den Informationsaustausch für die Kosten eines Telefongesprächs. Dieser Pricing Exchange besteht aus der Übertragung einer Pricinglndication, welche mit einer PricingConfirmation bestätigt werden muss. Der Authorization Exchange wird durchgeführt, wenn Ressourcen vom Clearing House benutzt werden sollen. Üblicherweise entspricht dies einer Autorisation für den Aufbau eines Telefongesprächs. Wie der Pricing Exchange basiert auch der Authorization Exchange auf dem Senden eines Authorization-Request, welcher mit einem AuthorizationResponse bestätigt wird. Der Usage Exchange beinhaltet eine Beschreibung der benutzten Ressourcen. Dazu wird eine Usagelndication gesendet, welche mit einer UsageConfirmation bestätigt wird. Da seitens OSP noch keine Dienste unterschieden werden können, ist unter dem Begriff Usage die Gesprächszeit für ein geführtes Telefonat zu verstehen.

Die IP-basierte Telefonie beziehungsweise Bildtelefonie im Stand der Technik sind aber mit erheblichen Nachteilen verbunden. Zwar ist es heute möglich, die Gesprächsteilnehmer in einem IP-basierten Netzwerk mittels beschriebenen Authentifizierungs- und Autorisierungsmechanismen zu authentifizieren und ihre Autorisierung für bestimmte Dientste zu überprüfen. Jedoch sind diese Authentifizierungs- und Autorisierungsmethoden ziemlich umständlich und entsprechen zudem nicht den hohen Standards bezüglich Sicherheit, Billing und Dienstautorisierung, wie sie in den herkömmlichen Telefonie-netzwerken gegeben sind. Insbesondere bieten GSM / UMTS-Mobilfunknetzwerke bezüglich Authentifizierung und Autorisierung Standards, welche in einem IP-basierten Netzwerk aufgrund seiner intrinsischen Eigenschaften nicht implementiert werden können. Der offenen Architektur des IP-Protokolls fehlen nämlich viele Informationen, welche zur vollen Kompatibilität mit den GSM-Netzwerken unbedingt benötigt werden.

Es ist daher eine Aufgabe der Erfindung, ein neues und besseres Verfahren sowie ein System zur uni- oder bidirektionale end-to-end Daten- und/oder Multimediastreamübertragungen in heterogenen Netzwerken vorzuschlagen. Insbesondere sollen dieses neue und bessere Verfahren sowie System ermöglichen, den Benutzern von IP-basierter Telefonie und/oder Bildtelefonie die gleichen Standards bezüglich Registration bzw. Authentifikation und Autorisation zur Verfügung zu stellen, wie sie es von der herkömmlichen Telefonie, wie z.B. von der GSM-Mobilfunktelefonie gewohnt sind.

Gemäss der vorliegenden Erfindung werden diese Ziele insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass für uni- oder bidirektionale unicast oder multicast end-to-end Daten- und/oder Multimediastreamübertragungen in heterogenen Netzwerken ein Netzwerknode über eine Schnittstelle bei einer zentrale Vermittlungseinheit eines IP-Netzwerkes mittels Request eine Datenverbindung zu einem oder mehreren Netzwerknodes fordert, wobei mindestens ein Netzwerknode ein IP-Netzwerknode ist und die Netzwerknodes mindestens teilweise bei einem Registrierungsmoduls der zentralen Vermittlungseinheit registriert werden und wobei mittels eines Kontrollmoduls der zentralen Verbindungseinheit die Verbindung zwischen den Netzwerknodes aufgebaut wird, dass zur Daten- und/oder Multimediastreamübertragung der mindestens eine IP-Netzwerknode auf Request des Registrierungsmoduls eine auf einer SIM-Karte des IP-Netzwerknodes gespeicherte IMSI an das Registrierungsmoduls übermittelt wird und die IMSI in einer Benutzerdatenbank des Registrierungsmoduls gespeichert wird, dass mittels einem Signaling-Gateway-Modul der IP-Datenkanal zu Signal- und Datenkanälen eines GSM-Netzwerkes ergänzt wird und zur Authentifizierung des mindestens einen IP-Netzwerknodes basierend auf den entspreched ergänzten GSM-Daten die notwendigen SS7/MAP-Funktionen generiert werden, dass das Registrierungsmoduls mittels Benutzerdatenbank und Signaling-Gateway-Modul eine Authentifizierung des IP-Netzwerknodes basierend auf der IMSI der SIM-Karte des mindestens einen IP-Netzwerknodes bei einem HLR und/oder VLR und/oder AuC und/oder funktionsequivalenten Datenbank durchführt, und dass bei erfolgreicher Authentifizierung der mindestens eine IP-Netzwerknode in der Benutzerdatenbank des Registrierungsmoduls einen entsprechenden Eintrag erhält, wobei die Datenverbindung zu den einen oder mehreren anderen Netzwerknode mittels einem Kontrollmodul der zentralen Verbindungseinheit erstellt wird. Die Erfindung hat unter anderem den Vorteil, dass sichere und bequeme Authentifizierung und/oder Autorisierung der Benutzer bei uni- oder bidirektionale unicast oder multicast end-to-end Daten- und/oder Multimediastreamübertragungen in heterogenen Netzwerken, insbesondere IP-Netzwerken, mittels einer zentrale Vermittlungseinheit möglich ist, wie es von der GSM-Mobilfunktelefonie bekannt ist. Unter "unicast" soll in dieser Anmeldung ganz allgemein eine End-to-End bidirektionale und/oder unidirektionale Datenverbindung zwischen zwei einzelnen Netzwerknodes verstanden werden, während unter "multicast" analog ganz allgemein einen End-to-End bidirektionale und/oder unidirektionale Datenverbindung zwischen einem zu mehreren Netzwerknodes verstanden werden soll.

In einer Ausführungsvariante können die Daten- und/oder Multimediastreamübertragungen z.B. insbesondere IP-basierte Telefonie und/oder Bildtelefonie umfassen. Die IP-basierte Telefonie und/oder Bildtelefonie kann mindestens teilweise auf dem Session Initiation Protocol (SIP) basiert, wobei das Kontrollmodul der zentralen Verbindungseinheit ein SIP Proxy-Netzwerkelement umfasst und wobei das Registrierungsmodul ein SIP Registrar- Netzwerkelement umfasst. Der mindestens eine IP-Netzwerknode kann ein IP-fähiges Mobilfunktelefon sein oder ein entsprechendes Modul umfassen. Dies hat unter anderem den Vorteil, dass sichere und bequeme Authentifizierung und/oder Autorisierung der Benutzer in einem IP-basierten Telefonie- und/oder Bildtelefonie-Netzwerk möglich werden. Durch das Verbinden der IP-basierten Telefonie und/oder Bildtelefonie, mit der bequemen und sicheren Verfahren wird eine hoch abgesicherte und bewährte Authentifizierung und/oder Autorisierung der Benutzer möglich, wie es von der GSM-Mobilfunktelefonie bekannt ist. Die Verwendung des SIP-Protokolls hat u.a. den Vorteil, dass das SIP-Protokoll in den IP-basierten Telefonie und/oder Bildtelefonie-Netzwerken eine vielverwendete Alternative ist. SIP ist leicht zu implementieren, angelehnt an das HTTP-Protokoll und erlaubt eine hohe Flexibilität für verschiedenste Anwendungen. Ebenfalls werden heute bereits viele Produkte auf dem Markt angeboten, welche SIP-Protokolle unterstützen.

In einer anderen Ausführungsvariante wird bei erfolgreicher Authentifizierung des IP-Netzwerknodes ein Location Update beim HLR und/oder VRL und/oder AuC und/oder einer funktionsequivalenten Datenbank durchgeführt und entsprechende Daten an das Registrierungsmodul übertragen. Dies hat den Vorteil, dass zusätzlich eine einfache Art der Session-Control zentral durchgeführt werden kann. Die dadurch ereichte Session-Control kann zusätzlich zu einer Session-Control in der zentralen Verbindungseinheit durchgeführt werden.

In einer weiteren Ausführungsvariante wird basierend auf der Authentifizierung mittels der IMSI die entsprechende Service Autorisierung zur Benutzung der Verbindungseinheit erteilt und/oder Billing der beanspruchten Leistung mittels eines Billing-Moduls durchführt. Diese Ausführungsvariante hat u.a. den Vorteil, dass ein einfaches Billing der beanspruchten Leistung durchgeführt werden kann. Das Billing kann damit z.B. auch direkt über Billingssysteme von Dienstanbietern in GSM-Netzwerken verrechnet werden, ohne dass die bestehenden Infrastrukturen in irgendeiner Weise verändert werden müssten. Zum Billing können z.B. auch mittels des Kontrollmoduls und/oder des IP-Netzwerknodes erzeugte Call Detail Records an das Registrierungsmodul übermittelt werden, wobei das Registrierungsmodul mindestens die Identität des IP-Netzwerknodes und/oder Zeitdauer und/oder Anbieter der beanspruchten Leistung erfasst und an ein Billing-Modul weitergibt, und dass das Billing-Modul entsprechend der beanspruchten Leistung basierend auf den Billing-Daten des Registrierungsmoduls und den Call Detail Records Billing-Files erzeugt und diese mit Fakturierungsanweisungen an ein Clearing-Modul übermittelt. Die Authentifizierung mittels der Verbindungseinheit kann z.B. auch nur durchgeführt werden, falls der Request zur Verbindung und/oder Verbindungsaufbau von einem IP-Netzwerknode stammt. Dies insbesondere, falls die Authentifizierung nur z.B. zur Durchführung eines Billings benutzt wird. Kommt der Request von einem anderen Netzwerkknoten als einem IP-Netzwerknode, wie z.B. von einem GSM-Netzwerkgerät, dann können auch, falls vorhanden, die in diesem Netzwerk typischen Biling-Verfahren verwendet werden. Die Verwendung der Call Detail Records hat unter anderem den Vorteil, dass die Verrechnung der beanspruchten Leistungen einfach über ein Clearing-Modul abgewickelt werden kann, insbesondere im Falle des Clearing zwischen den verschiedenen Netzwerkbetreibern.

In einer wieder anderen Ausführungsvariante kann die Authentifizierung des ein oder mehreren IP-Nodes mittels Extensible Authentication Protocol durchgeführt werden. Dies hat u.a. den Vorteil, dass z.B. in Kombination mit RADIUS ein vollständiges, Hardware unabhängiges, Verfahren erzeugt wird. Insbesondere bietet EAP die notwendigen Sicherheitsmechanismen zur Durchführung der Authentifizierung.

Prinzipiell kann an Stelle der SIM-Karte des IP-Nodes auch irgendein Identifikationsmodul verwendet werden. Die SIM-Karte hat jedoch unter anderem den Vorteil, dass SIM-Karte ein weitverbreitetes und bewährtes Mittel zur Identifikation von IP-Nodes, insbesondere mobilen IP-Nodes ist. Es entspricht ebenfalls den hohen Sicherheitsstandards und kann dank ihrer kleinen Grösse auch leicht ausgetauscht oder transportiert werden. Dazu sind die Herstellungskosten solcher SIM-Karten gering im Vergleich zu anderen ähnlichen Identifikationsmechanismen.

In einer Ausführungsvariante werden Authentifizierungsdaten eingesetzt, welche den GSM-Standard erfüllen. Diese Ausführungsvariante hat unter anderem den Vorteil, dass eine bestehende GSM-Infrastruktur eines Anbieters ohne grössere Modifikationen verwendet werden kann. Dabei werden für die Benutzer der IP-basierten Telefonie und/oder Bildtelefonie Benutzerprofile kreiert, wie für die Benutzer der gewöhnlichen Mobilfunktelephonie. Zudem können auf diese Art und Weise bestehende hohe Sicherheitskriterien der GSM-Technologie ausgenutzt werden.

In einer weiteren Ausführungsvariante werden die Authentifizierungsdaten vom IP-Netzwerknode an das Registrationsmodul über eine kontaktlose Schnittstelle übertragen. Diese Ausführungsvariante hat unter anderem den Vorteil, dass mobile IP-Nodes eingesetzt werden können, welche eine grössere Mobilität der Benutzer der IP-basierten Telefonie und/oder Mobiltelefonie ermöglicht, vergleichbar mit der Mobilfunktelefonie.

In einer weiteren Ausführungsvariante werden die Authentifizierungsdaten vom IP-Node an das Registrationsmodul über eine WLAN 802.11- und/oder Bluetooth- und/oder GSM- und/oder UMTS-Schnittstelle übertragen werden. Dies hat den Vorteil, dass bekannte und etablierte Netzwerke zur Übertragung von Authentifizierungsdaten verwendet werden können, so dass bestehende Einrichtungen (Hotspots) verwendet werden können.

An dieser Stelle soll festgehalten werden, dass sich die vorliegende Erfindung neben dem erfindungsgemässen Verfahren auch auf ein System zur Ausführung dieses Verfahrens bezieht.

Nachfolgend werden Ausführungsvarianten der vorliegenden Erfindung anhand von Beispielen beschrieben. Die Beispiele der Ausführungen werden durch folgende beigelegten Figuren illustriert:

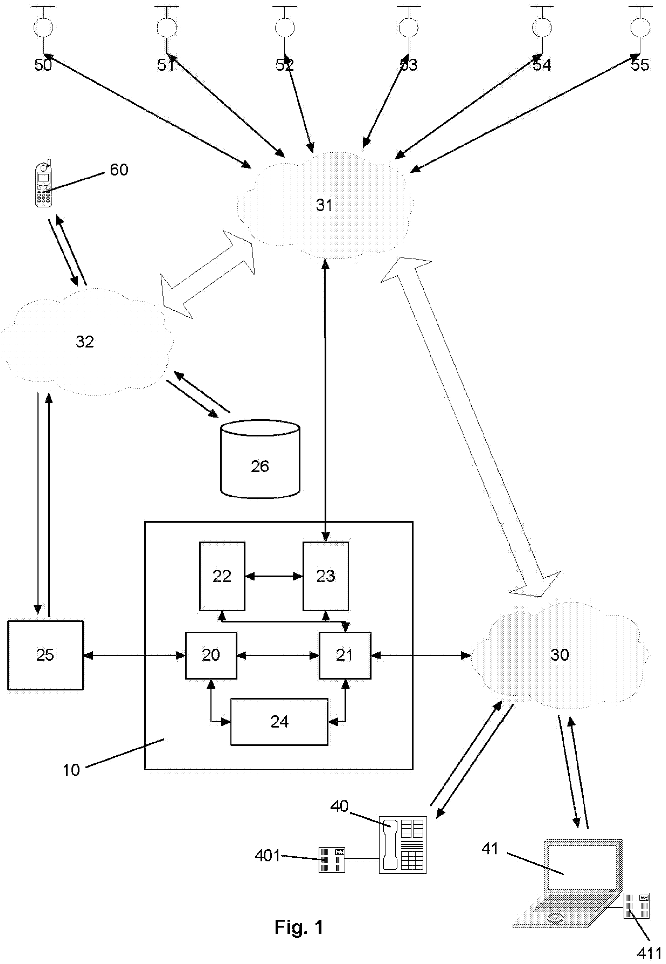

Figur 1 zeigt ein Blockdiagramm, welches schematisch ein erfindungsgemässes Verfahren und ein erfindungsgemässes System für uni- oder bidirektionale unicast oder multicast end-to-end Daten- und/oder Multimediastreamübertragungen in heterogenen Netzwerken, insbesondere für IP-basierte Telefonie und/oder Bildtelefonie illustriert, wobei die IP-Nodes 40/41 ein Identifikationsmodul 401/411 umfassen und über ein Datennetzwerk 30 auf eine Vermittlungseinheit 10 bzw. entsprechende Infrastruktur für Datenübertragungen oder Erstellung von Datenverbindungen zugreifen. Die Verbindungsvorrichtung 10 umfasst ein Singaling-Gateway-Modul 20, Kontrollmodul 21, Registrierungsmodul 22 sowie ein IP/PSTN Gateway 23, mittels welches Kommunikation zu den über das öffentliche geschaltete Telefonienetzwerk 31 geschalteten Telefonen 50,...,55 aufgebaut wird.

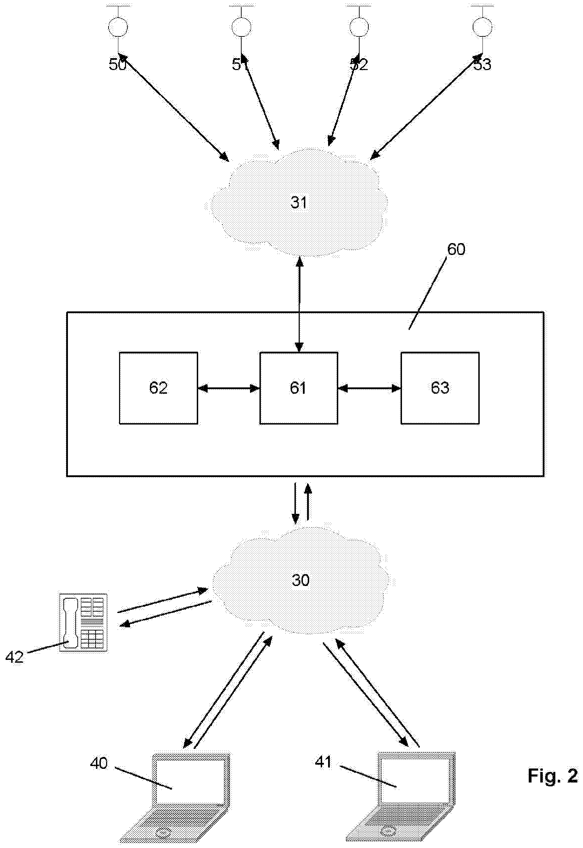

Figur 2 zeigt ein Blockdiagramm, welches schematisch ein Verfahren und ein System für IP-basierte Telefonie und/oder Bildtelefonie des Standes der Technik illustriert. Dabei greifen die IP-Nodes 40,...,42 über ein Datennetzwerk 30 auf ein System bzw. eine entsprechende Infrastruktrur für IP-basierte Telefonie und/oder Bildtelefonie 60 zu. Diese Infrastruktur für IP-basierte Telefonie und/oder Bildtelefonie 60 umfasst ein Registrierungsmodul 61, ein Kontrollmodul 62 und ein Gateway IP/PSTN 63, mittels welches Kommunikation zu den über das öffentliche geschaltete Telephonienetzwerk 31 geschalteten Telefonen 50,...,53 aufgebaut wird.

Figur 1 illustriert eine Architektur, die zur Realisierung der Erfindung verwendet werden kann. In der Figur 1 bezieht sich das Bezugszeichen 40/41 auf IP-Netzwerknode bzw. IP-Netzwerkknoten, welche über die notwendige Infrastruktur, einschliesslich aller Hardware- und Softwarekomponenten verfügt, um ein beschriebenes erfindungsgemässes Verfahren und/oder System zu realisieren. Unter IP-Netzwerknodes 40/41 sind unter anderem alle möglichen sogenannten Customer Premise Equipment (CPE) zu verstehen, die zur Benutzung an verschiedenen Netzwerkstandorten und/oder mit verschiedenen Netzwerken vorgesehen sind. Diese umfassen beispielsweise IP-basierte Telefone und/oder Videofone, sowie sämtliche andere IP-fähigen Geräte wie zum Beispiel PDAs, Laptops oder Mobilfunktelefone. Die IP-Nodes 40/41 besitzen eine oder mehrere verschiedene physikalische Netzwerkschnittstellen, die auch mehrere verschiedene Netzwerkstandards unterstützen können. Diese physikalischen Netzwerkschnittstellen des IP-Nodes 40/41 können beispielsweise kontaktlose Schnittstellen zu WLAN (Wireless Local Area Network), Bluetooth, GSM (Global System for Mobile Communication), GPRS (Generalised Packet Radio Service), USSD (Unstructured Supplementary Services Data), EDGE (Enhanced Data Rates for GSM Evolution) oder UMTS (Universal Mobile Telecommunications System) usw. umfassen. Dies können aber auch physikalische Netzwerkschnittstellen zu Ethernet, Token Ring oder einem anderen Wired LAN (Local Area Network) sein. Die Bezugszeichen 30/31/32 stellen entsprechend die verschiedenen Netzwerke dar, beispielsweise ein Wireless LAN (basierend auf IEEE 802.1x), ein Bluetooth-Netzwerk, ein Wired LAN (Ethernet oder Token Ring), aber auch ein Mobilfunknetzwerk (GSM, UMTS, etc.) oder ein PSTN-Netzwerk. Die physischen Netzwerkschnittstellen des IP-Nodes 40/41 können nicht nur packet-switched Schnittstellen, wie sie von Netzwerkprotokollen direkt benutzt werden, sondern auch circuit-switched Schnittstellen, die mittels Protokollen wie zum Beispiel PPP (Point to Point Protocol), SLIP (Serial Line Internet Protocol) oder GPRS (Generalised Packet Radio Service) für den Datentransfer benutzt werden können.

Des Weiteren umfasst der IP-Node 40/41 ein Identifikationsmodul 401/411. Dieses Identifikationsmodul 401/411 kann hardwaremässig oder softwaremässig implementiert sein und über eine kontaktbehaftete oder kontaktlose Schnittstelle mit dem IP-Node 40/41 verbunden, bzw. in den IP-Node 40/41 integriert sein. Insbesondere kann das Identifikationsmodul 41 als eine SIM-Karte realisiert sein, wie man sie von den Mobilfunktelefonen kennt. Dieses Identifikationsmodul 401/411 beinhaltet unter anderem die für die Authentifizierung des IP-Nodes 40/41 in einem IP-basierten Netzwerk für Telefonie und/oder Bildtelefonie relevanten Authentifizierungsdaten. Diese Authentifizierungsdaten können insbesondere eine IMSI (International Mobile Subscriber Identifier) und/oder TMSI (Temporary Mobile Subscriber Identifier) und/oder LAI (Location Area Identity) usw. umfassen, welche dem GSM-Standard entsprechen.

Zur Registrierung des IP-Nodes 40/41 für uni- oder bidirektionale unicast oder multicast end-to-end Daten- und/oder Multimediastreamübertragungen, insbesondere IP-basierte Telefonie und/oder Bildtelefonie in heterogenen Netzwerken 30/31/32 fordert ein Netzwerknode über eine kontaktbehaftete oder kontaktlose Schnittstelle bei einer zentrale Verbindungseinheit 10 eines IP-Netzwerkes 30 mittels Request eine Datenverbindung zu einem oder mehreren Netzwerknodes. Unter Punkt-zu-Punkt-Verbindung (Unicast) sind grundsätzlich alle direkten Verbindungen zwischen zwei Netzwerkteilnehmern von Punkt-zu-Punkt zu verstehen. Dies umfasst sowohl Punkt-zu-Punkt als auch Ende-zu-Ende Verbindungen. Punkt-zu-Punkt-Verbindungen funktionieren in diesem Sinne ohne eigentliche vermittelnde Zwischenstation. Darunter fallen die Kommunikation in den unteren Netzwerkschichten (1-3 im OSI- Modell). Unter End-to-End-Verbindungen fallen auch alle Verbindungen auf den höheren Netzwerkschichten (4-7 im OSI-Modell). Bei der End-to-End-Kommunikation wird zur Weitervermittlung stets eine Zwischenstation genutzt. Man spricht dabei auch von Multihop-Kommunikation. Multicast bezeichnet Datenübertragung in Gruppen (auch Mehrpunktverbindung genannt). Bei Multicast werden Daten gleichzeitig an mehrere Teilnehmer oder an eine geschlossene Teilnehmergruppe übertragen, meist ohne dass sich beim Sender die Bandbreite mit der Zahl der Empfänger multipliziert. Der Sender braucht beim Multicasting nur die gleiche Bandbreite wie ein einzelner Empfänger. Handelt es sich um paketorientierte Datenübertragung, findet die Vervielfältigung der Pakete an jedem Verteiler (Switch, Router) auf der Route statt. IP-Multicast ermöglicht es, in TCP/IP-Netzwerken effizient Daten an viele Empfänger zur gleichen Zeit zu senden. Das kann z.B. mittels einer speziellen Multicast-Adresse geschehen. In IPv4 ist hierfür der Adress-Bereich 224.0.0.0 bis 239.255.255.255 (Klasse D), in IPv6 jede mit FF00 beginnende Adresse reserviert. Zusätzlich wird zur Koordination bei IPv4 das Protokoll IGMP benutzt. In IPv6 kann ICMPv6 die Steuerungsfunktion übernehmen. Unter Unicast bzw. Multicast soll in diesem Dokument explizit auch bidirektionale Verbindungen verstanden werden, d.h. dass einzelne Gruppenteilnehmer jeweils mit allen anderen kommunizieren bzw. Datenübertragen können. Das erfindungsgemässe Vermittlungssystem umfasst die genannte zentrale Verbindungseinheit 10 zum Generieren von Datenverbindungen zwischen zwei oder mehreren Netzwerknodes 40,...,42/50,...,55/60 basierend auf einem Request des Netzwerknodes. Die Netzwerknodes 40,...,42/50,...,55/60 umfassen mindestens ein IP-Netzwerknode 40/41. Die zentrale Verbindungseinheit 10 umfasst ein Registrierungsmodul 22 zum Registrieren der Netzwerknodes umfasst und ein Kontrollmodul 21 zum Aufbauen der Verbindung zwischen den Netzwerknodes. Der mindestens eine IP-Netzwerknode 40/41 umfasst wie erwähnt eine SIM-Karte 401/411 zum Speichern einer IMSI sowie Mittel zum Übertragen des IMSI auf Request an das Registrierungsmoduls 22. Die IMSI ist in einer Benutzerdatenbank des Registrierungsmoduls 22 speicherbar ist. Zur Authentifizierung des ein oder mehreren IP-Nodes 40/41 kann die zentrale Verbindungseinheit z.B. das Extensible Authentication Protocol verwenden. Das Vermittlungssystem umfasst weiter ein Signaling-Gateway-Modul 20 zum Ergänzen des logischen IP-Datenkanal zu Signal- und Datenkanälen eines GSM-Netzwerkes. Mittels eines MAP-Gateway-Modul 25 werden zur Authentifizierung des mindestens einen IP-Nodes 20 die notwendigen SS7/MAP-Funktionen generiert. Es kann sinnvoll sein, dass das Signaling-Gateway-Modul 20 und MAP-Gateway-Modul 25 in einem einzigen Modul gemeinsam realisiert sind. Das Registrierungsmoduls 22 authentifiziert mittels Benutzerdatenbank und Signaling-Gateway-Modul 20 basierend auf der IMSI der SIM-Karte 401/411 des mindestens einen IP-Netzwerknodes 40/41 bei einem HLR und/oder VLR und/oder AuC 26 und/oder einer funktionsequivalenten Datenbank den mindestens einen IP-Netzwerknode 40/41. Bei erfolgreicher Authentifizierung der mindestens eine IP-Netzwerknode 40/41 in der Benutzerdatenbank des Registrierungsmoduls 22 wird ein entsprechender Eintrag gespeichert und/oder die Datenverbindung zu den einen oder mehreren anderen Netzwerknode mittels einem Kontrollmodul 21 der zentralen Verbindungseinheit 10 erstellt.

Zum Beispiel fordert der IP-Node 40/41 über die Schnittstelle zum IP-basierten Netzwerk 30 den Zugang zu einem Telefonie- und/oder Bildtelefonie-Dienst. Wie bereits beschrieben, kann das IP-basierte Netzwerk 30 verschiedene Netzwerkstandards und -protokolle umfassen, wie z.B. drahtlose Netzwerke WLAN 802.11 oder Bluetooth oder aber verkabelte Netzwerke Ethernet oder Token Ring etc. Die zentrale Verbindungseinheit 10 umfasst ein IP/PTSN Gateway 23, welches die Verbindung zwischen dem IP-basierten Netzwerk 30 und dem öffentlichen geschalteten Telefonienetzwerk (PSTN) 31 und/oder Mobilfunknetzwerk 32 gewährleistet. Es ist wichtig zu erwähnen, dass das Gateway IP/PSTN 23 integriert zur zentralen Vermittlungseinheit 10 und/oder abgesetzt über das IP-Netzwerk 30 zur zentralen Vermittlungseinheit 10 betrieben werden kann. Der Zugang zu den Mobilfunknetzwerken 32 kann auch über das Signaling-Gateway-Modul 20 erfolgen. Die Infrastruktur kann nach den Forderungen des SIP- (Session Initiation Protocol) und/oder H.323-und/oder MGCP- (Media Gateway Control Protocol) und/oder MEGACO-Protokolls (Media Gateway Control) für die IP-basierte Telefonie und/oder Bildtelefonie gebaut sein. Eine Registrationsaufforderung beinhaltet die Authentifizierungsdaten vom Identifikationsmodul 401/411 des IP-Nodes 40/41 und Registrierungsdaten zur Registration im IP-basierten Telefonie- und/oder Bildtelefonie-Netzwerk. Die Authentifizierungsdaten können insbesondere die IMSI von einer GSM-basierten SIM-Karte beinhalten. Diese Registrationsaufforderung wird an das Registrierungsmodul 22 des IP-basierten Telefonie- und/oder Bildtelefonie-Netzwerks übermittelt, beispielsweise an einen SIP-Register. Die Authentifizierungsdaten werden vom Registrierungsmodul 22 von den Registrierungsdaten getrennt und an ein Authentifizierungsmodul, wie z.B. einen AuC (Authentification Center) übermittelt. Basierend auf den Authentifizierungsdaten werden die notwendigen Authentifikation und/oder Autorisation und/oder Konfigurationsfunktionen generiert, so dass das Authentifikationsmodul die Authentifizierung und/oder Autorisation des IP-Nodes 40/41 basierend auf den Authentifizierungsdaten vom Identifikationsmodul 401/411 des IP-Nodes 40/41 bei einem Home Location Registry (HLR) und/oder Visitor Location Register (VLR) und/oder Authentification Center und/oder funktionsäquvalenten Datenbank 26 durchführt. Diese Datenbank 26 kann insbesondere wie erwähnt ein Home Location Registry (HLR) eines GSM-Netzwerks sein oder umfassen und entsprechende Benutzerprofile beinhalten. Es ist auch vorstellbar, dass für die Authentifizierung des IP-Nodes 40/41 bloss bei einem oder mehreren der Schritte in der Authentifikation die IMSI vom Identifikationsmodul 401/411 des IP-Nodes 40/41 verwendet wird, während bei allen weiteren Authentifikationsschritten die IMSI durch eine generierte temporäre IMSI (genannt TMSI) ersetzt wird.

Für das Authentifizierungsverfahren kann insbesondere folgendes Challenge-Response Verfahren verwendet werden. Als Challenge (Frage) erhält das Identifikationsmodul 401/411 (z.B. die SIM-Karte) eine 128-bit Zufallszahl (RAND) gegeben. Anschliessend wird auf dem Identifikationsmodul 401/411 ein für den jeweiligen Operator spezifischer, vertraulicher Algorithmus ausgeführt, der als Input die Zufallszahl RAND und einen geheimen, auf dem Identifikationsmodul 401/411 gespeicherten Schlüssel Ki erhält und daraus eine 32-bit Antwort (SRES) und ein 64-bit Schlüssel Kc generiert. Kc dient zur Verschlüsselung des Datentransfers über drahtlose Schnittstellen (GSM Technical Specification GSM 03.20 (IETS 300 534): "Digital cellular telecommunication system (Phase 2); Security related network functions", European Telecommunications Standards Institute, August 1997). Zur Authentifizierung werden mehrere RAND Challenge zum Generieren von mehreren 64-bit Kc Schlüsseln verwendet. Diese Kc-Schlüssel werden zu einem längeren Session Key kombiniert. Zu Beginn der Authentifizierung überträgt der IP-Node 40/41 die International Mobile Subscriber Identity (IMSI) des Benutzer vom Identifikationsmodul 401/411 ans Registrationsmodul 22. Mit der IMSI erhält das Registrierungsmodul 22 auf eine Triplet-Anfrage vom entsprechenden HLR 26, bzw. der entsprechenden Datenbank n GSM-Triplets. Aus den Triplets berechnet das Registrierungsmodul 22 MAC_RAND und den Session Key K. Die Berechnung der kryptographischen Werte des SIM-generierten Session Key K und der Message Authentification Codes MAC-RAND und MAC_SRES könne beispielsweise dem Dokument "HMAC: Keyed-Hashing for Message Authentification" von H. Krawczyk, M. Bellar und R. Canetti (RFC2104, Feb. 1997) entnommen werden. Danach läuft der GSM-Authentifikationsalgorithmus auf dem Identifikationsmodul 401/411 des IP-Nodes 40/41 und berechnet eine Kopie von MAC_RAND. Der IP-Node 40/41 kontrolliert, dass der berechnete Wert von MAC_RAND gleich dem erhaltenen Wert von MAC_RAND ist. Ergibt sich keine Übereinstimmung der beiden Werte, bricht der IP-Node 40/41 das Authentifikationsverfahren ab und schickt keine vom Identifikationsmodul 401/411 berechneten Authentifikationswerte an das Netzwerk. Da der Wert RAND zusammen mit dem Message Authentifikations-Code MAC_RAND erhalten wird, kann der IP-Node 40/41 sicherstellen, dass RAND neu ist und vom Netzwerk generiert wurde. Bei erfolgreicher Authentifizierung kann z.B. ein Location Update beim HLR 26 bzw. der funktionsäquivalenten Datenbank durchgeführt werden und der IP-Node 10 erhält in einer Customer Database des Registrierungsmoduls 22 einen entsprechenden Eintrag.

Nach der erfolgten Authentifizierung und/oder Autorisierung beim Home Location Registry 26 bzw. der funktionsäquivalenten Datenbank werden die entsprechenden Lokalisierungsdaten vom Authentifizierungsmodul an das Registrierungsmodul 22 übermittelt. Mittels des Registrierungsmoduls 22 werden die Lokalisierungsdaten in einer Datenbank mit Informationen über die IP-Nodes 40/41 in dem IP-basierten Telefonie- und/oder Bildtelefonie-Netzwerk gespeichert. Insbesondere können diese Lokalisierungsdaten IP-Adresse, MAC-Adresse und weitere relevante Daten für die IP-basierte Telefonie und/oder Bildtelefonie beinhalten. Zusätzlich zur Authentifizierung im IP-basierten Telefonie- und/oder Bildtelefonie-Netzwerk können z.B. auch durch das Kontrollmodul (21) und/oder den IP-Netzwerknodes (40/41) erzeugte Call Detail Records an das Registrierungsmodul 22 übermittelt. Mittels des Registrierungsmodul 22 kann dann mindestens die Indentität des IP-Nodes 40/41 und/oder Zeitdauer und/oder Anbieter der beanspruchten Leistung erfasst werden und z.B. an ein Billing-Modul weitergegeben werden. Mittels des Billing-Modul können entsprechend der beanspruchten Leistung basierend auf den Billing-Daten des Registrierungsmoduls 40/41 und den Call Detail Records Billing-Files erzeugt und diese mit Fakturierungsanweisungen an ein Clearing-Modul übermittelt werden. Anschliessend werden vom Registrierungsmodul 22 entsprechende Authentifizierungsdaten an das Identifikationsmodul 401/411 des IP-Nodes 40/41 übertragen und gespeichert, womit der IP-Node 40/41 für die IP-basierte Telefonie und/oder Bildtelefonie freigegeben wird.

Wie erwähnt kann bei erfolgreicher Authentifizierung des IP-Netzwerknodes 40/41 ein Location Update beim HLR 25 und/oder VRL und/oder AuC und/oder einer funktionsequivalenten Datenbank durchgeführt werden und entsprechende Daten an das Registrierungsmodul 22 übertragen werden. Dies kann durchgeführt werden, ist aber keineswegs ein erfindungsnotwendiges Merkmal. Der Location-Update dient lediglich zur Session-Control. D.h. dass an einer zentralen Stelle kontrollierbar ist, ob die gleiche Identifikationsnummer, wie z.B. die IMSI und/oder MSISDN, mehrfach und gleichzeitig verwendet wird, z.b. in betrügerischer Absicht, indem gestohlenen oder andersweitig unrecht erworbenen Identifikationsmodule 401/411 und/oder Identifikationsnummer missbräuchlich verwendet werden.

Das Kontrollmodul 21 kann auch z.B. nur basierend auf der Authentifizierung mittels der IMSI die entsprechende Service Autorisierung zur Benutzung der Verbindungseinheit 10 erteilen und/oder das Kontrollmodul 21 kann ein eintsprechendes Billing der beanspruchten Leistung mittels eines Billing-Moduls 24 bzw. einer entsprechenden Billingplatform initiieren. Damit kann ein einfaches Billing der beanspruchten Leistung durchgeführt werden. Das Billing kann z.B. auch direkt über Billingssysteme von Dienstanbietern in GSM-Netzwerken verrechnet werden, ohne dass die bestehenden Infrastrukturen in irgendeiner Weise verändert werden müssten. Zum Billing können z.B. auch Call Detail Records des IP-Netzwerknodes 40/41 an das Registrierungsmodul 22 übermittelt werden, wobei das Registrierungsmodul 22 mindestens die Identität des IP-Netzwerknodes 40/41 und/oder Zeitdauer und/oder Anbieter der beanspruchten Leistung erfasst und an das Billing-Modul 24 weitergibt. Das Billing-Modul 24 kann z.B. entsprechend der beanspruchten Leistung basierend auf den Billing-Daten des Registrierungsmoduls 22 und den Call Detail Records Billing-Files erzeugen und diese mit Fakturierungsanweisungen an ein Clearing-Modul übermitteln. Die Authentifizierung mittels der Verbindungseinheit kann z.B. auch nur durchgeführt werden, falls der Request zur Verbindung und/oder Verbindungsaufbau von einem IP-Netzwerknode 40/41 stammt. Dies insbesondere, falls die Authentifizierung nur z.B. zur Durchführung eines Billings benutzt wird. Kommt der Request von einem anderen Netzwerkknoten 50,...,55,60 als einem IP-Netzwerknode 40/41, wie z.B. von einem GSM-Netzwerkgerät 60, dann können auch, falls vorhanden, die in diesem Netzwerk 31/32 typischen Biling-Verfahren verwendet werden. Die Verwendung der Call Detail Records hat unter anderem den Vorteil, dass die Verrechnung der beanspruchten Leistungen einfach über ein Clearing-Modul abgewickelt werden kann, insbesondere im Falle des Clearings zwischen den verschiedenen Netzwerkbetreibern.

### Referenzliste

10 Zentrale Vermittlungseinheit
20 Signaling-Gateway-Modul
21 Kontrollmodul
22 Registrierungsmodul
23 Gateway IP/PSTN
24 Billing Modul / Billing Platform
25 MAP Gateway
26 HLR / VLR / AuC
30 IP-Netzwerk
31 PSTN (öffentlich geschaltetes Telephonnetzwerk)
32 GSM Netzwerk
40/41/42 IP-Netzwerknode
401/411 SIM
50,...,55 Netzwerknodes des PSTN (Telephone)
60 Netzwerknodes eines Mobilfunknetzes

## Patentansprüche

1. Verfahren für IP-basierte Telefonie und/oder Bildtelefonie basierend auf dem Session Initiation Protocol (SIP) in heterogenen Netzwerken (30/31/32), wobei ein Netzwerknode über eine Schnittstelle bei einer zentrale Verbindungseinheit (10) eines IP-Netzwerkes (30) mittels Request eine Datenverbindung zu einem oder mehreren Netzwerknodes fordert, wobei mindestens ein Netzwerknode ein IP-Netzwerknode (40/41) ist und die Netzwerknodes bei einem SIP Registrar- Netzwerkelement (22) der zentralen Verbindungseinheit (10) registriert werden und wobei mittels einem SIP Proxy-Netzwerkelement (21) der zentralen Verbindungseinheit (10) die Verbindung zwischen den Netzwerknodes aufgebaut wird, **dadurch gekennzeichnet,**
**dass** zur Daten- und/oder Multimediastreamübertragung der mindestens eine IP-Netzwerknode (40/41) auf Request des SIP Registrar- Netzwerkelement (22) eine auf einer SIM-Karte (401/411) des IP-Netzwerknodes (40/41) gespeicherte IMSI an das SIP Registrar- Netzwerkelement (22) übermittelt wird und dass die IMSI in einer Benutzerdatenbank des SIP Registrar- Netzwerkelement (22) gespeichert wird,
**dass** mittels einem Signaling-Gateway-Modul (20) der logische IP-Datenkanal zu Signal- und Datenkanälen eines GSM-Netzwerkes ergänzt wird und zur Authentifizierung des mindestens einen IP-Netzwerknodes (40/41) basierend auf den entsprechend ergänzten GSM-Daten die notwendigen SS7/MAP-Funktionen generiert werden,
**dass** das SIP Registrar- Netzwerkelement (22) mittels Benutzerdatenbank und Signaling-Gateway-Modul (20) eine Authentifizierung des IP-Netzwerknodes (40/41) basierend auf der IMSI der SIM-Karte (401/411) des mindestens einen IP-Netzwerknodes (40/41) bei einem HLR/VLR/AuC (26) und/oder funktionsequivalenten Datenbank durchführt, und
**dass** bei erfolgreicher Authentifizierung der IP-Netzwerknode (40/41) in der Benutzerdatenbank des SIP Registrar- Netzwerkelement (22) einen entsprechenden Eintrag erhält, wobei die Datenverbindung zu einem anderen Netzwerknode mittels des SIP Proxy-Netzwerkelement (21) der zentralen Verbindungseinheit (10) erstellt wird, wobei basierend auf der Authentifizierung mittels der IMSI die entsprechende Service Autorisierung zur Benutzung der zentralen Verbindungseinheit (10) erteilt und das Billing der beanspruchten Leistung mittels eines Billing-Moduls (24) durchführt wird.

2. Verfahren nach Anspruch 1, **dadurch gekennzeichnet, dass** bei erfolgreicher Authentifizierung des IP-Netzwerknodes (40/41) ein Location Update beim HLR (25) und/oder VRL und/oder AuC durchgeführt wird und entsprechende Daten an das SIP Registrar-Netzwerkelement (22) übertragen werden.

3. Verfahren nach einem der Ansprüche 1 bis 3, **dadurch gekennzeichnet, dass** die Authentifizierung mittels der zentralen Verbindungseinheit (10) nur durchgeführt wird, falls der Request zur Verbindung von einem IP-Netzwerknode (40/41) stammt.

4. Verfahren nach einem der Ansprüche 1 bis 4, **dadurch gekennzeichnet, dass** die Authentifizierung des ein oder mehreren IP-Nodes (40/41) mittels Extensible Authentication Protocol durchgeführt wird.

5. Verfahren nach einem der Ansprüche 1 bis 5, **dadurch gekennzeichnet, dass** der mindestens eine IP-Netzwerknode (40/41) ein IP-fähiges Mobilfunktelefon ist.

6. Verfahren nach einem der Ansprüche 1 bis 5 **dadurch gekennzeichnet, dass** durch das Kontrollmodul (21) und/oder den IP-Netzwerknodes (40/41) erzeugte Call Detail Records an das Registrierungsmodul (22) übermittelt werden, wobei das SIP Registrar- Netzwerkelement (22) mindestens die Identität des IP-Netzwerknodes (40/41) und/oder Zeitdauer und/oder Anbieter der beanspruchten Leistung erfasst und an ein Billing-Modul (24) weitergibt, und dass das Billing-Modul (24) entsprechend der beanspruchten Leistung basierend auf den Billing-Daten des SIP Registrar- Netzwerkelement (22) und den Call Detail Records Billing-Files erzeugt und diese mit Fakturierungsanweisungen an ein Clearing-Modul übermittelt.

7. Verfahren nach einem der Ansprüche 1 bis 6 **dadurch gekennzeichnet, dass** zentrale Verbindungseinheit (10) ein IP/PTSN Gateway (23) zur Verbindung zwischen IP-basierten Netzwerk (30) und öffentlich geschalteten Telefonienetzwerk (31) und/oder Mobilfunknetzwerk (32), wobei das Gateway IP/PSTN (23) integriert zur zentralen Verbindungseinheit 10 und/oder über das IP-Netzwerk (30) abgesetzt zur zentralen Verbindungseinheit (10) betrieben wird.

8. Vermittlungssystem für IP-basierte Telefonie und/oder Bildtelefonie basierend auf dem Session Initiation Protocol (SIP) in heterogenen Netzwerken (30/31/32), wobei das Vermittlungssystem eine zentrale Verbindungseinheit (10) zum Generieren von Datenverbindungen zwischen zwei oder mehreren Netzwerknodes (40,...,42/50,...,55/60) basierend auf einem Request eines Netzwerknodes umfasst, welche Netzwerknodes (40,...,42/50,...,55/60) mindestens ein IP-Netzwerknode (40/41) umfassen, wobei die zentrale Verbindungseinheit (10) ein SIP Registrar- Netzwerkelement (22) zum Registrieren der Netzwerknodes und ein SIP Proxy-Netzwerkelement (21) zum Aufbauen der Verbindung zwischen den Netzwerknodes umfasst, **dadurch gekennzeichnet,**
**dass** der mindestens eine IP-Netzwerknode (40/41) eine SIM-Karte (401/411) zum Speichern einer IMSI sowie Mittel zum Übertragen des IMSI auf Request an das SIP Registrar-Netzwerkelement (22) umfasst, wobei das SIP Registrar- Netzwerkelement (22) eine Benutzerdatenbank zum Speichern der IMSI umfasst,
**dass** das Vermittlungssystem ein Signaling-Gateway-Modul (20) zum Ergänzen eines logischen IP-Datenkanal zu Signal- und Datenkanälen eines GSM-Netzwerkes umfasst, wobei zur Authentifizierung des mindestens einen IP-Nodes (20) mittels eines MAP-Gateway-Modul (25) die notwendigen SS7/MAP-Funktionen generierbar sind,
**dass** das SIP Registrar- Netzwerkelement (22) Mittel zum Authentifizieren des mindestens einen IP-Netzwerknodes (40/41) mittels Benutzerdatenbank und Signaling-Gateway-Modul (20) basierend auf der IMSI der SIM-Karte (401/411) des mindestens einen IP-Netzwerknodes (40/41) bei einem HLR und/oder VLR und/oder AuC (26) und/oder einer funktionsequivalenten Datenbank umfasst, und
**dass** bei erfolgreicher Authentifizierung der mindestens eine IP-Netzwerknode (40/41) in der Benutzerdatenbank des SIP Registrar- Netzwerkelement (22) einen entsprechenden Eintrag speicherbar ist und/oder die Datenverbindung zu einem anderen Netzwerknode mittels des SIP Proxy-Netzwerkelement (21) der zentralen Verbindungseinheit (10) erstellbar ist, wobei das Vermittlungssystem eine Kontrolleinheit zum Erteilen einer entsprechenden Service Autorisierung zur Benutzung der zentralen Verbindungseinheit (10) basierend auf der Authentifizierung mittels der IMSI umfasst und/oder die zentrale Verbindungseinheit ein Billing-Modul (24) zum Billing der beanspruchten Leistung umfasst.

9. Vermittlungssystem nach Anspruch 8 **dadurch gekennzeichnet, dass** bei erfolgreicher Authentifizierung des IP-Netzwerknodes (40/41) ein Location Update beim HLR (25) und/oder VRL und/oder AuC durchführbar ist und entsprechende Daten an das SIP Registrar-Netzwerkelement (22) übertragbar sind.

10. Vermittlungssystem nach einem der Ansprüche 8 bis 9, **dadurch gekennzeichnet, dass** die Authentifizierung des ein oder mehreren IP-Nodes (40/41) mittels Extensible Authentication Protocol realisiert ist.

11. Vermittlungssystem nach einem der Ansprüche 8 bis 10, **dadurch gekennzeichnet, dass** der mindestens eine IP-Netzwerknode (40/41) ein IP-fähiges Mobilfunktelefon ist.

12. Vermittlungssystem nach einem der Ansprüche 8 bis 11, **dadurch gekennzeichnet, dass** das SIP Proxy-Netzwerkelement (21) und/oder der IP-Netzwerknodes (40/41) Mittel zum Erfassen und/oder Generieren von Call Detail Records umfasst, welche Call Detail Records dem entsprechenden IP-Netzwerknodes (40/41) vom SIP Registrar-Netzwerkelement (22) zugeordnet sind, wobei mittels des SIP Registrar- Netzwerkelement (22) basierend auf den Call Detail Records mindestens die Identität des IP-Netzwerknodes (40/41) und/oder Zeitdauer und/oder Anbieter der beanspruchten Leistung erfassbar und/oder an ein Billing-Modul (24) übermittelbar sind, und dass mittels des Billing-Modul (24) entsprechend der beanspruchten Leistung basierend auf den Billing-Daten des SIP Registrar- Netzwerkelement (22) und den Call Detail Records Billing-Files erzeugbar sind und diese mit Fakturierungsanweisungen an ein Clearing-Modul übermittelbar sind.

## Claims

1. A method for IP based telephony and/or video telephony based on the Session Initiation Protocol (SIP) in heterogeneous networks (30/31/32), wherein a network node requests a data connection to one or more network nodes via an interface for a central connecting unit (10) of an IP network (30), wherein at least one network node is an IP network node (40/41), and the network nodes for a SIP registrar network element (22) of the central connecting unit (10) are registered, and wherein the connection between the network nodes is established by means of a SIP proxy network element (21) of the central connecting unit (10), **characterized in that**
for data and/or multimedia stream transmission of the at least one IP network node (40/41), upon request by the SIP registrar network element (22) an IMSI stored on a SIM card (401/411) of the IP network nodes (40/41) is transmitted to the SIP registrar network element (22), and the IMSI is stored in a user database of the SIP registrar network element (22),
the logical IP data channel for signal and data channels of a GSM network is supplemented by means of a signaling gateway module (20), and the necessary SS7/MAP functions are generated in order to authenticate the at least one IP network node (40/41), based on the correspondingly supplemented GSM data,
by means of a user database and a signaling gateway module (20), the SIP registrar network element (22) carries out an authentication of the IP network nodes (40/41) based on the IMSI of the SIM card (401/411) of the at least one IP network node (40/41) for an HLR/VLR/AuC (26) and/or functionally equivalent database, and
upon successful authentication, the IP network node (40/41) receives a corresponding entry in the user database of the SIP registrar network element (22), wherein the data connection for a different network node is created by means of the SIP proxy network element (21) of the central connecting unit (10), wherein the corresponding service authorization for use of the central connecting unit (10) is granted based on the authentication by means of the IMSI, and the billing for the requested service is carried out by means of a billing module (24).

2. The method according to Claim 1, **characterized in that** upon successful authentication of the IP network node (40/41), a location update is carried out for the HLR (25) and/or VRL and/or AuC, and corresponding data are transmitted to the SIP registrar network element (22).

3. The method according to one of Claims 1 to 3, **characterized in that** the authentication is carried out by means of the central connecting unit (10) only if the request for the connection originates from an IP network node (40/41).

4. The method according to one of Claims 1 to 4, **characterized in that** the authentication of the one or more IP nodes (40/41) is carried out via Extensible Authentication Protocol.

5. The method according to one of Claims 1 to 5, **characterized in that** the at least one IP network node (40/41) is an IP-capable mobile telephone.

6. The method according to one of Claims 1 to 5, **characterized in that** call detail records generated by the control module (21) and/or the IP network nodes (40/41) are transmitted to the registration module (22), wherein the SIP registrar network element (22) records at least the identity of the IP network node (40/41) and/or the duration and/or the provider of the requested service and relays same to a billing module (24), and the billing module (24) generates billing files corresponding to the requested service, based on the billing data of the SIP registrar network element (22) and the call detail records, and transmits these together with billing instructions to a clearing module.

7. The method according to one of Claims 1 to 6, **characterized in that** the central connecting unit (10) [includes] an IP/PTSN gateway (23) for connection between the IP based network (30) and the public switched telephone network (31) and/or the mobile communications network (32), wherein the gateway IP/PSTN (23) is operated integrally with the central connecting unit 10, and/or separately from the central connecting unit (10) via the IP network (30).

8. A switching system for IP-based telephony and/or video telephony based on the Session Initiation Protocol (SIP) in heterogeneous networks (30/31/32), wherein the switching system includes a central connecting unit (10) for generating data connections between two or more network nodes (40,...,42/50,...,55/60) based on a request by a network node, the network nodes (40,...,42/50,...,55/60) including at least one IP network node (40/41), wherein the central connecting unit (10) includes a SIP registrar network element (22) for registering the network nodes and a SIP proxy network element (21) for establishing the connection between the network nodes, **characterized in that**
the at least one IP network node (40/41) includes a SIM card (401/411) for storing an IMSI and means for transmitting the IMSI to the SIP registrar network element (22) upon request, wherein the SIP registrar network element (22) includes a user database for storing the IMSI,
the switching system includes a signaling gateway module (20) for supplementing a logical IP data channel for signal and data channels of a GSM network, wherein the necessary SS7/MAP functions are generatable in order to authenticate the at least one IP node (20) by means of a MAP gateway module (25),
the SIP registrar network element (22) includes means for authenticating the at least one IP network node (40/41) by means of the user database and the signaling gateway module (20), based on the IMSI of the SIM card (401/411) of the at least one IP network node (40/41) for an HLR and/or VLR and/or AuC (26) and/or an functionally equivalent database, and
upon successful authentication of the at least one IP network node (40/41), a corresponding entry is storable in the user database of the SIP registrar network element (22), and/or the data connection for a different network node is creatable by means of the SIP proxy network element (21) of the central connecting unit (10), wherein the switching system includes a control unit for granting a corresponding service authorization for use of the central connecting unit (10) based on the authentication by means of the IMSI, and/or the central connecting unit includes a billing module (24) for billing for the requested service.

9. The switching system according to Claim 8, **characterized in that** upon successful authentication of the IP network node (40/41), a location update for the HLR (25) and/or VRL and/or AuC may be carried out, and corresponding data are transmittable to the SIP registrar network element (22).

10. The switching system according to one of Claims 8 to 9, **characterized in that** the authentication of the one or more IP nodes (40/41) is implemented via Extensible Authentication Protocol.

11. The switching system according to one of Claims 8 to 10, **characterized in that** the at least one IP network node (40/41) is an IP-capable mobile telephone.

12. The switching system according to one of Claims 8 to 11, **characterized in that** the SIP proxy network element (21) and/or the IP network node (40/41) include(s) means for recording and/or generating call detail records, the call detail records being associated with the corresponding IP network node (40/41) by the SIP registrar network element (22), wherein at least the identity of the IP network node (40/41) and/or the duration and/or the provider of the requested service is/are recordable and/or transmittable to a billing module (24) by means of the SIP registrar network element (22) based on the call detail records, and billing files are generatable by means of the billing module (24) corresponding to the requested service, based on the billing data of the SIP registrar network element (22) and the call detail records, and these together with billing instructions are transmittable to a clearing module.

## Revendications

1. Procédé de téléphonie et/ou de visiophonie basée(s) sur IP, sur la base du protocole d'initialisation de session (SIP) dans des réseaux hétérogènes (30/31/32), dans lequel un noeud de réseau demande, par l'intermédiaire d'une interface, à une unité de communication centrale (10) d'un réseau IP (30), au moyen d'une requête, une communication de données avec un ou plusieurs noeuds de réseau, dans lequel au moins un noeud de réseau est un noeud de réseau IP (40/41) et les noeuds de réseau sont enregistrés auprès d'un élément de réseau d'enregistrement SIP (22) de l'unité de communication centrale (10), et dans lequel la communication entre les noeuds de réseau est établie au moyen d'un élément de réseau proxy SIP (21) de l'unité de communication centrale (10),
**caractérisé en ce que**
pour la transmission de données et/ou de flux multimédia dudit au moins un noeud de réseau IP (40/41), suite à une requête de l'élément de réseau d'enregistrement SIP (22), une IMSI mémorisée sur une carte SIM (401/411) du noeud de réseau IP (40/41) est transmise à l'élément de réseau d'enregistrement SIP (22), et l'IMSI est mémorisée dans une base de données utilisateur de l'élément de réseau d'enregistrement SIP (22),
au moyen d'un module de passerelle de signalisation (20), le canal de données IP logique est complété en canaux de signaux et de données d'un réseau GSM, et pour l'authentification dudit au moins un noeud de réseau IP (40/41) les fonctions SS7/MAP nécessaires sont générées sur la base des données GSM complétées de façon adéquate,
l'élément de réseau d'enregistrement SIP (22) effectue au moyen de la base de données utilisateur et du module de passerelle de signalisation (20) une authentification du noeud de réseau IP (40/41) sur la base de l'IMSI de la carte SIM (401/411) dudit au moins un noeud de réseau IP (40/41) auprès d'un HLR/VLR/AuC (26) et/ou d'une base de données de fonctionnalité équivalente, et
en cas d'authentification réussie du noeud de réseau IP (40/41) dans la base de données utilisateur, l'élément de réseau d'enregistrement SIP (22) reçoit un enregistrement correspondant, la communication de données étant établie avec un autre noeud de réseau au moyen de l'élément de réseau proxy SIP (21) de l'unité de communication centrale (10), dans lequel, sur la base de l'authentification au moyen de l'IMSI, l'authentification de service correspondante pour l'utilisation de l'unité de communication centrale (10) est accordée et la facturation du service sollicité est effectuée au moyen d'un module de facturation (24).

2. Procédé selon la revendication 1, **caractérisé en ce qu'**en cas d'authentification réussie du noeud de réseau IP (40/41), une mise à jour de localisation est effectuée dans le HLR (25) et/ou le VLR et/ou l'AuC et des données correspondantes sont transmises à l'élément de réseau d'enregistrement SIP (22).

3. Procédé selon l'une quelconque des revendications 1 à 3, **caractérisé en ce que** l'authentification de l'unité de communication centrale (10) n'est effectuée que si la requête de communication provient d'un noeud de réseau IP (40/41).

4. Procédé selon l'une quelconque des revendications 1 à 4, **caractérisé en ce que** l'authentification dudit un ou desdits plusieurs noeuds IP (40/41) est effectuée par un protocole d'authentification extensible.

5. Procédé selon l'une quelconque des revendications 1 à 5, **caractérisé en ce que** ledit au moins un noeud de réseau IP (40/41) est un téléphone mobile compatible IP.

6. Procédé selon l'une quelconque des revendications 1 à 5, **caractérisé en ce que** des enregistrements des détails des appels, générés par le module de contrôle (21) et/ou le noeud de réseau IP (40/41), sont transmis au module d'enregistrement, dans lequel l'élément de réseau d'enregistrement SIP (22) détecte au moins l'identité du noeud de réseau IP (40/41) et/ou la durée et/ou le fournisseur du service sollicité et les transmet à un module de facturation (24), et **en ce que** le module de facturation (24) génère selon le service sollicité, sur la base des données de facturation de l'élément de réseau d'enregistrement SIP (22) et des enregistrements des détails des appels, des fichiers de facturation et les transmet à un module de compensation avec des instructions de facturation.

7. Procédé selon l'une quelconque des revendications 1 à 6, **caractérisé en ce que** l'unité de communication centrale (10) présente une passerelle IP/PTSN (23) pour la communication entre un réseau basé sur IP (30) et le réseau téléphonique public commuté (31) et/ou un réseau de téléphonie mobile (32), dans lequel la passerelle IP/PSTN (23) est exploitée de manière intégrée avec l'unité de communication centrale (10) et/ou à distance de l'unité de communication centrale (10) en passant par le réseau IP.

8. Système de commutation pour la téléphonie et/ou la visiophonie basée (s) sur IP sur la base du protocole d'initialisation de session (SIP) dans des réseaux hétérogènes (30/31/32), dans lequel le système de commutation comprend une unité de communication centrale (10) pour générer des communications de données entre deux ou plusieurs noeuds de réseau (40, ..., 42/50, ..., 55/60) sur la base d'une requête d'un noeud de réseau, lesquels noeuds de réseau (40, ..., 42/50, ..., 55/60) comprennent au moins un noeud de réseau IP (40/41), dans lequel l'unité de communication centrale (10) comprend un élément de réseau d'enregistrement SIP (22) pour enregistrer les noeuds de réseau et un élément de réseau proxy SIP (21) pour établir la communication entre les noeuds de réseau,
**caractérisé en ce que**
ledit au moins un noeud de réseau IP (40/41) comprend une carte SIM (401/411) pour mémoriser une IMSI ainsi que des moyens pour transmettre l'IMSI à l'élément de réseau d'enregistrement SIP (22), suite à une requête, l'élément de réseau d'enregistrement SIP (22) comprenant une base de données utilisateur pour mémoriser l'IMSI,
le système de commutation comprend un module de passerelle de signalisation (20) pour compléter un canal de données IP logique en canaux de signaux et de données d'un réseau GSM, les fonctions SS7/MAP nécessaires à l'authentification dudit au moins un noeud IP (20) pouvant générées au moyen d'un module de passerelle MAP (25),
l'élément de réseau d'enregistrement SIP (22) comprend des moyens pour authentifier ledit au moins un noeud de réseau IP (40/41) au moyen d'une base de données utilisateur et d'un module de passerelle de signalisation (20) sur la base de l'IMSI de la carte SIM (401/411) dudit au moins un noeud de réseau IP (40/41) auprès d'un HLR et/ou d'un VLR et/ou d'un AuC (26) et/ou d'une base de données de fonctionnalité équivalente, et
en cas d'authentification réussie, ledit au moins un noeud de réseau IP (40/41) peut être mémorisé dans la base de données utilisateur de l'élément de réseau d'enregistrement SIP (22), et/ou la communication de données peut être établie avec un autre noeud de réseau au moyen de l'élément de réseau proxy SIP (21) de l'unité de communication centrale (10), le système de commutation comprenant une unité de contrôle pour accorder une autorisation de service correspondante pour l'utilisation de l'unité de communication centrale (10) sur la base de l'authentification au moyen de l'IMSI, et/ou l'unité de communication centrale comprenant un module de facturation (24) pour facturer le service sollicité.

9. Système de commutation selon la revendication 8, **caractérisé en ce qu'**en cas d'authentification réussie du noeud de réseau IP (40/41), une mise à jour de localisation peut être effectuée dans le HLR (25) et/ou le VLR et/ou l'AuC et des données correspondantes peuvent être transmises à l'élément de réseau d'enregistrement SIP (22).

10. Système de commutation selon l'une quelconque des revendications 8 à 9, **caractérisé en ce que** l'authentification dudit un ou desdits plusieurs noeuds IP (40/41) est réalisée au moyen du protocole d'authentification extensible.

11. Système de commutation selon l'une quelconque des revendications 8 à 10, **caractérisé en ce que** ledit au moins un noeud de réseau IP (40/41) est un téléphone mobile compatible IP.

12. Système de commutation selon l'une quelconque des revendications 8 à 11, **caractérisé en ce que** l'élément de réseau proxy SIP (21) et/ou le noeud de réseau IP (40/41) comprend/comprennent des moyens pour détecter et/ou générer des enregistrements des détails des appels, lesquels enregistrements des détails des appels étant attribués à l'élément de réseau d'enregistrement SIP (22), dans lequel il est possible au moyen de l'élément de réseau d'enregistrement SIP (22), sur la base des enregistrements des détails des appels, de détecter au moins l'identité du noeud de réseau IP (40/41) et/ou la durée et/ou le fournisseur du service sollicité, et/ou de les transmettre à un module de facturation (24), et **en ce qu'**il est possible au moyen du module de facturation (24) de générer des fichiers de facturation selon le service sollicité, sur la base des données de facturation de l'élément de réseau d'enregistrement SIP (22) et des enregistrements des détails des appels, et de les transmettre à un module de compensation avec des instructions de facturation.
